# EUROPEAN PATENT APPLICATION

(11) **EP 3 516 956 A1**
(43) Date of publication of application: **31.07.2019**
(21) Application number: 19154118.4
(22) Date of filing: 29.01.2019
(51) Int. Cl.: A01K 7/00, F16K 17/30, A01K 7/06, F16K 15/06

(54) **VALVE FOR A DRINKING TROUGH**

(30) Priority: 30.01.2018 IT 201800002193
(71) Applicant: Iotti Zootecnia Srl, 42124 Reggio Emilia (IT)
(72) Inventor: BURATTI, Luca, 42123 Reggio Emilia (IT)
(74) Representative: Persi, Patrizia

(57) **Abstract**

Described is a valve (5) for a drinking trough wherein the drinking trough (1) comprises a collection tank (2) for containing a food preparation for animals. The valve (5) is configured for supplying the food preparation to the collection tank (2) and for receiving the food preparation from supply piping (4) of the food preparation. The valve (5) comprises a valve body (100) having an inlet chamber (101) and an outlet chamber (102), coaxially positioned along a common axis (X), a conduit (110) with a narrowed section between the inlet chamber (101) and the outlet chamber (102); a shutter (104) mounted on the valve body (100), in a slidable fashion along an axis (X), and having a stem (105) at least partly inserted inside the conduit (110). The shutter (104) also comprises a closing plate (107), coupled to a first end (105a) of the stem (105) and configured for abutting a first shoulder (103a) in a closed condition of the valve (5), in such a way that when the pressure of the food preparation inside the inlet chamber (101) is below a predetermined value, the closing plate (107) is kept spaced from the first shoulder (103a) by means of an opposing member (109) and the food preparation can flow from the inlet chamber (101) to the outlet chamber (102), whilst when the pressure of a cleaning liquid inside the inlet chamber (101) is above the predetermined value the closing plate (107) causes a closing the valve (5). The closing plate (107) comprises a cup-shaped body (120) provided with a bottom (121), from which extends the stem (105), and an annular sealing element (107a) made of elastomeric material, the sealing element (107a) surrounding the stem (105) and being housed in the cup-shaped body (120) for making a fluid-tight seal with a planar annular portion of the first shoulder (103a) in the closed condition of the valve (5).

## Description

This invention relates to a valve for a drinking trough and a drinking trough for animals comprising the above-mentioned valve.

More specifically, the term "drinking trough" means a trough used to collect water-based food preparations for the nutrition of animals, that is to say, for the nursing and/or feeding ad/or the watering of animals.

In detail, the valve according to the invention is designed for widespread use in drinking troughs in the nurseries of animal farms, in particular pig farms, in which the suckling piglets are generally separated from the sow a few weeks after the birth.

In fact, the suckling of piglets is not carried out by sows but by means of special drinking troughs.

These drinking troughs comprise a collection tank, the dimensions of which can depend on the needs of the farmer, configured for receiving and collecting the water-based food preparation, that is to say, the so-called milk for suckling the piglets.

The term water-based food preparation means a food preparation comprising water and at least one of the following components selected in the group listed below: cereal powder, milk powder, fish powder, milk serum, carob pods, dextrose, coconut oils, palm oil, essential amino acids, mineral salts, copper, zinc, calcium and their mixes.

In particular, the food preparation must be introduced in the tank at a temperature of between 4 and 60 degrees Centigrade and at a pressure typically below 1 Bar.

The food preparation can also be just water, possibly with the addition of specific food supplements, for the drinking of the animals.

In light of this, a suitable hydraulic system is configured to supply food preparation to each individual collection tank.

The hydraulic system comprises supply piping from a source of food preparation, for example a reservoir, to every collection tank.

The most recent drinking troughs possess an actuator mechanism which allows the animal to make the food preparation flow from the supply piping to the collection tank.

In short, the suckling piglet, in order to drink, must press an actuation linkage, of known type, with its snout, which allows the flow of food preparation into the collection tank.

These drinking troughs need continuous cleaning in order to avoid the proliferation of infected agents and the subsequent diffusion in the animals.

In light of this, a special procedure for cleaning the supply piping was developed which uses a cleaning liquid, for example, water at a high temperature and high pressure, for example greater than 5 Bar.

In short, the dispensing of the food preparation is suspended momentarily and water at a temperature of approximately 80 degrees and under high pressure is made to flow through the supply piping in such a way as to remove the impurities which may be present.

The valves which allow the supply to the prior art drinking troughs are not able to differentiate between the procedure for cleaning the piping with that for the normal supply of the food preparation.

The suckling piglets which attempt to drink during this procedure find themselves struck by a high pressure jet, and also at a high temperature, with the risk of possible burning. These events, that often occur in farms, traumatise the suckling pigs, which, after being burnt, are unlikely to find confidence again in the use of the drinking trough and their correct growth can therefore be adversely affected.

Document US2926690 comprises a pressure-sensitive valve for a gas system, or for lines which might be dangerous, which is normally opened and closed in the presence of an excessive pressure.

Document WO9705414 describes a valve for controlling a fluid, such as petrol or diesel oil, which can be used for a connection from a reservoir to a dispensing device, which can prevent the dispensing of the fuel when the pressure exceeds an excessive value.

Document US3872884 shows a valve for stopping a flow through a fluid line if the flow rate exceeds a predetermined quantity.

The above-mentioned documents describe valves which are able to stop a fluid, either gas or fuel, when the fluid is at an excessive pressure but they require a high level of manufacturing precision and the fluid flowing in them must have been previously filtered, that is to say, be free of solid particles in suspension.

The valves cannot therefore be used effectively for a drinking trough, in which the collection tank can be supplied with a food preparation, such as water, but also a mixture of various components and/or food supplements in water. If the food preparation is milk, the valves shown in previous documents might become clogged with any lumps present in the food preparation.

The technical purpose of the invention is therefore to provide a valve for a drinking trough which is able to overcome the drawbacks of the prior art.

The aim of the invention is therefore to provide a valve for a drinking trough which is able to allow a flow of a low pressure water-based food preparation to a collection tank for drinking and/or feeding by animals and which at the same time, in an efficient and safe manner, prevents the flow of high pressure cleaning liquid to the collection tank, during a procedure for cleaning the piping.

Another aim of this invention is therefore to provide a valve for a drinking trough which is simple and inexpensive to make and which at the same time guarantees a passage of the food preparation even if the food preparation itself is not uniform, having lumps in suspension.

A further aim of the invention is to provide a drinking trough comprising the valve according to the invention which overcomes the above-mentioned drawbacks of the prior art.

The technical purpose indicated and the aims specified are substantially achieved by a valve for drinking troughs comprising the features described in one or more of the accompanying claims. The dependent claims correspond to possible embodiments of the invention.

Further features and advantages of the invention are more apparent in the non-limiting description which follows of a preferred embodiment of a valve for a drinking trough and of a drinking trough.

The description is set out below with reference to the accompanying drawings which are provided solely for purposes of illustration without restricting the scope of the invention and in which:
- Figure 1 is a sectional view of a drinking trough for animals according to the invention;
- Figure 2 is a sectional view of a valve for a drinking trough according to a vertical plane in a closed configuration;
- Figure 3 is a sectional view of the valve for the drinking trough of Figure 2 according to a vertical plane in an open configuration;
- Figure 4 is an exploded perspective view of the valve for a drinking trough of Figures 2 and 3.

With reference to the accompanying drawings, the numeral 1 denotes in its entirety a drinking trough for animals which, for simplicity, will hereafter be referred to as drinking trough 1.

The drinking trough 1 is configured for the nutrition, and that is to say, the nursing and/or feeding and/or drinking of the animals, preferably pigs, for example in the period just after birth, by means of a water-based food preparation.

In particular, the very young pigs, the so-called suckling piglets, are separated from the sows just a few weeks after birth and their nursing is therefore performed by a special drinking trough which supplies to them their food preparation, for example milk, necessary for their growth.

A description of the food preparation usually used for suckling piglets has been described above and is not repeated here. However, it should be noted that the invention can also be advantageously applied if the food preparation is water for drinking by animals, optionally with the addition of specific food supplements.

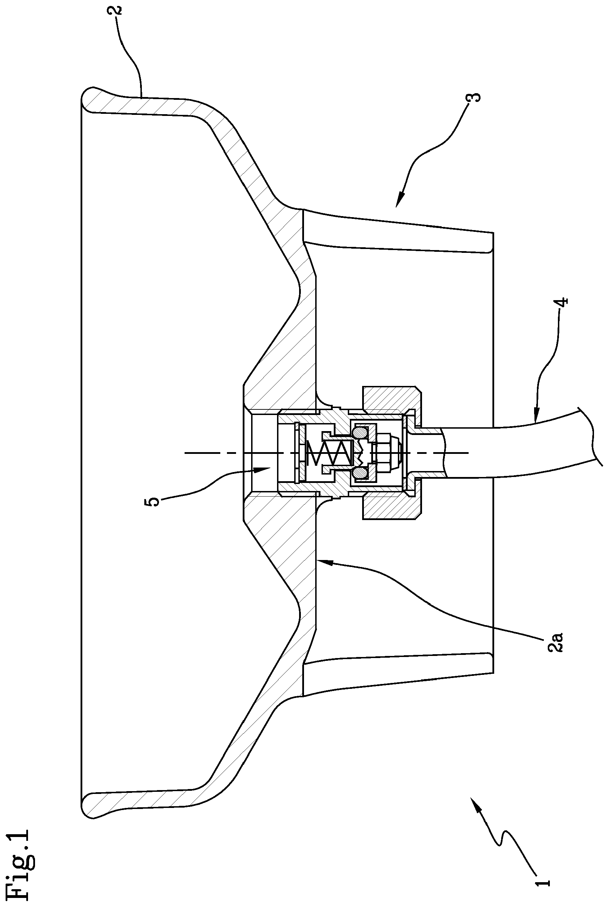

As shown in Figure 1, the drinking trough 1 comprises a collection tank 2 configured to contain a predetermined quantity of food preparation for animals.

Preferably, the collection tank 2 is made of a material which is resistant to wear due to the continuous exposure to water-based liquids, such as, for example, the stainless steel.

In the embodiment illustrated in Figure 1, the collection tank 2 is substantially cup-shaped with a mainly radial extension.

Advantageously, this shape allows an easy and intuitive nutrition by the animals, for example suckling piglets.

According to alternative embodiments, the collection tank 2 may be made of different materials, such as, for example, polymeric materials, different types of metal or ceramic materials, and adopting shapes different from that indicated above, without altering the inventive concept of the invention.

The collection tank 2 may be positioned on the ground or on a support resting on a relative lower supporting surface.

According to a preferred embodiment and as shown in Figure 1, the collection tank 2 comprises a supporting element 3 to which it is connected. Advantageously, this configuration allow an efficient connection with supply piping 4 of the food preparation.

More specifically, the collection tank 2 can be connected to the supply piping 4 close to a relative lower end 2a.

The supply piping 4 is configured for supplying the collection tank 2 from an external source of liquid (not shown in the drawings).

For example, the supply piping 4 may be connected to a tank (not shown in the drawings) containing the food preparation, or, in the case of water, to the water supply network. The supply piping 4 can also be connected to a high pressure cleaning liquid, during the procedures for cleaning the drinking trough.

The drinking trough 1 comprises a hydraulic valve 5 which is configured for feeding the food preparation to the collection tank 2 and for receiving the preparation from the supply piping 4.

In other words, the collection tank 2 can be connected to the supply piping 4 by means of the hydraulic valve 5 since the hydraulic valve 5 is interposed between the collection tank 2 and the supply piping 4.

In this way, the valve 5 is specially configured to allow the controlled passage of the food preparation from the supply piping 4 to the collection tank 2.

Moreover, the valve 5 is configured to prevent the flow of cleaning liquid to the collection tank 2 during a procedure for cleaning the supply piping 4.

In particular, during this procedure the dispensing of the food preparation is suspended and a predetermined quantity of cleaning liquid, for example water, at a high temperature, of approximately 80 degrees, and at a preset high pressure, for example between 3 and 5 Bar, is made to flow in the supply piping 4 in such a way as to remove any impurities present in the supply piping 4 following the passage of the food preparation and to contrast any bacterial proliferation in the piping.

It should be noted that a further cleaning procedure can also comprise the flowing of cleaning liquid at a low temperature but at a high pressure, only for the purpose of removing any impurities present in the supply piping 4 if it is not necessary to contrast the proliferation of bacterial flora in the piping.

The valve 5 prevents the passage of the cleaning liquid used for the cleaning operation from the supply piping 4 to the collection tank 2 in such a way as to prevent the high pressure cleaning liquid from entering into contact with the animals whilst they are feeding.

Preferably, the valve 5 is connected to the supply piping 4 by means of reversible connecting means, such as, for example, quick coupling means or threaded bolt-body connections.

The valve 5 in accordance with the invention is described in detail below.

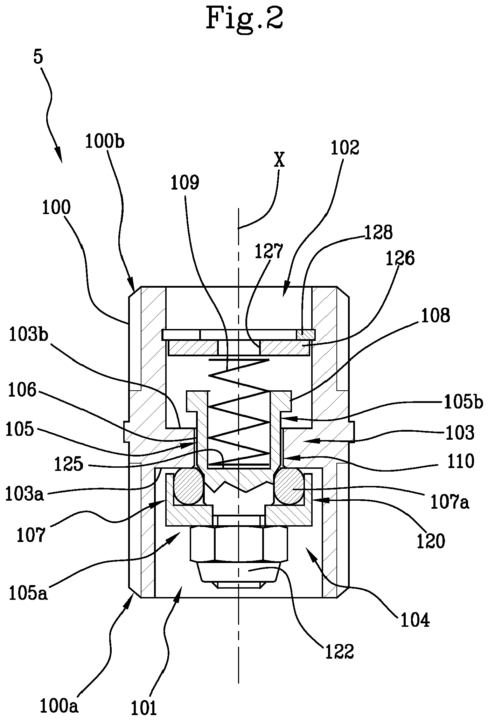

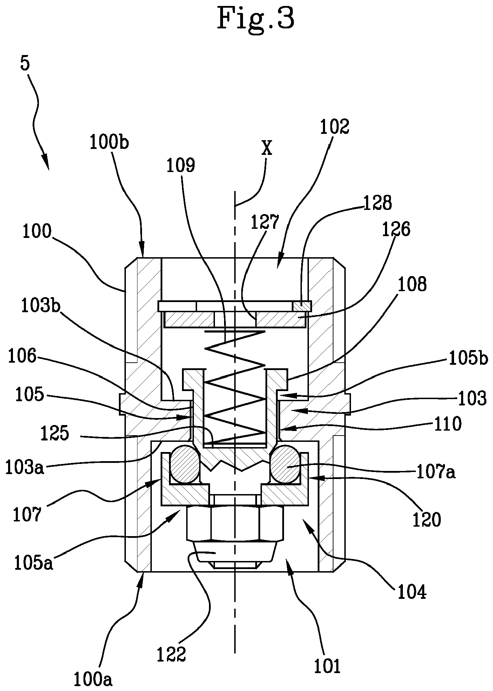

According to the preferred embodiment and as shown in Figures 2 to 4, the valve 5 is elongate in shape with a main direction of extension along an axis "X", designed to be oriented preferably in a vertical direction, and preferably with a circular section.

The valve 5, which, as mentioned above, is configured to receive a water-based food preparation from supply piping 4 and is configured to supply the preparation to a collection tank 2 of the drinking trough, comprises a valve body 100.

The valve body 100 is made with a substantially hollow cylindrical shape and defines the part of the valve 5 designed to enter into coupling with the collection tank 2.

In particular, the valve body 100 has an inlet end 100a, connectable to the supply piping 4 of the food preparation or of the cleaning liquid, and an outlet end 100b, connectable to the collection tank 2 of the food preparation to allow the feeding of the animals.

More in detail, the inlet end 100a is located below whilst the outlet end 100b is located above.

The valve body 100 is made preferably of metal material, designed to resist corrosion induced by the presence of flowing fluids, for example stainless steel.

In accordance with variant embodiments, the valve body 100 may be made of different metallic materials or other types of material, such as, for example, a polymeric material, and have shapes different from that described above without altering the inventive concept of the invention.

In the accompanying drawings, the valve body 100 comprises an inlet chamber 101 and an outlet chamber 102, coaxially positioned along a common axis X of symmetry for the valve 5.

The valve body 100 has a radial expansion 103 with an annular shape interposed between the inlet chamber 101 and the outlet chamber 102 to define a reduction of the passage section for the food preparation, in other words to define a conduit 110, which has a narrowed section relative to the chambers 101, 102 and connects the two chambers 101, 102.

The conduit 110 is, for example, central relative the common axis X.

The inlet chamber 101 faces towards the inlet end 100a and can be connected to the supply piping 4.

The outlet chamber 102 faces towards the outlet end 100b and can be connected to the collection tank 2. Preferably, the two chambers 101, 102 are reciprocally superposed or aligned along the above-mentioned axis "X".

Moreover, preferably, the inlet chamber 101 and the outlet chamber 102 have a substantially tubular shape and a substantially circular cross-section.

The radial expansion 103 extends towards the inside, that is to say, radially towards the above-mentioned axis "X", and defines a first shoulder 103a and a second shoulder 103b positioned opposite each other and facing, respectively, towards the inlet chamber 101 and towards the outlet chamber 102.

The valve 5 also comprises a shutter 104 mounted on the valve body 100, in a slidable fashion along the axis "X", in particular inside the valve body 100.

Advantageously, the shutter is slidable along the axis "X"' but is also free to move transversely with respect to the axis "X" since it is not fixed to the valve body 100 but is only positioned inside it.

In accordance with a preferred embodiment of this invention and as described in the accompanying drawings, the shutter 104 comprises a stem 105 at least partly inserted inside the conduit 110 in such a way as to be slidable along the above-mentioned axis "X".

In particular, the stem 105 has a substantially tubular shape, preferably with a circular cross section and is positioned astride the conduit 110.

The stem 105 of the shutter 104 and the radial expansion 103 define between them a calibrated passageway 106 configured for putting in fluid communication the inlet chamber 101 and the outlet chamber 102 in an open condition of the valve 5, so as to allow a supply of food preparation towards the collection tank 2.

In particular, the stem 105 has a diameter equal to 8 mm. The calibrated passageway 106 has, in detail, a thickness of between 0.08 mm and 0.60 mm, for example between 0.1 mm and 0.5 mm, and preferably constant.

In other words, the calibrated passageway 106 is an annular conduit for communication between the inlet chamber 101 and the outlet chamber 102.

According to a preferred embodiment and as shown in the accompanying drawings, the stem 105 has a first end 105a, coupled to a closing plate 107.

More specifically, as shown in Figure 2, the closing plate 107 is positioned inside the inlet chamber 101 and is configured for abutting the first shoulder 103a in a closed condition of the valve 5.

The shutter 104 is subject to the action of an opposing member, for example a helical compression spring 109, to keep the closing plate 107 in a position spaced from the first shoulder 103a in an open condition of the valve 5.

In this way, when the pressure inside the inlet chamber 101 is below a predetermined value (normal condition for supplying the food preparation), the closing plate 107 is kept spaced from the first shoulder 103a by means of the opposing member guaranteeing the opening of the valve 5. The food preparation can thereby flow through the calibrated passageway 106 and, therefore, the food preparation can be supplied to the collection tank 2.

On the other hand, when the pressure of a cleaning liquid inside the inlet chamber 101 rises above the predetermined value (condition typical of a cleaning procedure with a high pressure cleaning liquid), the closing plate 107 of the shutter 104 is pushed against the first shoulder 103a causing a closure of the valve 5.

It should be noted that the closing plate 107 comprises a cup-shaped body 120, equipped with a bottom 121, from which extends the stem 105, and a sealing element 107a which is annular and made of elastomeric material. Advantageously, in accordance with this invention, the sealing element 107a surrounds the stem 105 and is housed in the cup-shaped body 120 for making a fluid-tight seal with a planar annular portion of the first shoulder 103a in the closed condition of the valve 5.

Both the first shoulder 103a and the second shoulder 103b are, in effect, planar surfaces.

Thanks to the fluid-tight seal achieved by means of the annular sealing element 107a which engages in the planar portion of the first shoulder 103a and thanks to the fact that the shutter 104 is not connected to the valve body 100, but is free to move inside along the axis "X" and transversely relative to it, the closed condition of the valve 5 is guaranteed even if impurities remain inside the valve body 100 caused by any lumps present in the food preparation.

The deformability of the sealing element 107a guarantees the fluid-tight seal even if the closing plate 107 is pushed against the first shoulder 103a, and hence against the planar surface of it, oriented differently relative to an ideal condition.

The bottom 121 has a central opening 121a. The stem 105, in effect, has an end portion, at the first end 105a, positioned so that it can be inserted in the central opening 121a and to protrude from the bottom 121, when the stem 105 is mounted on the cup-shaped body 120. The valve 5 comprises, in effect, a fixing element 122, shaped to couple with the protruding end portion in such a way as to fix the stem 105 centrally on the cup-shaped body 120. The fixing element 122 is, for example, a bolt for fixing with threaded coupling the stem 105 to the cup-shaped body 120. The shutter 104 comprises an end of stroke plate 108 located at a second end 105b of the stem 105,

The end of stroke plate 108 is configured for abutting the second shoulder 103b in an end of stroke opening condition of the shutter 104 corresponding to a maximum distance between the closing plate 107 and the first shoulder 103a.

The end of stroke plate 108 is positioned opposite the closing plate 107 and is positioned inside the outlet chamber 102.

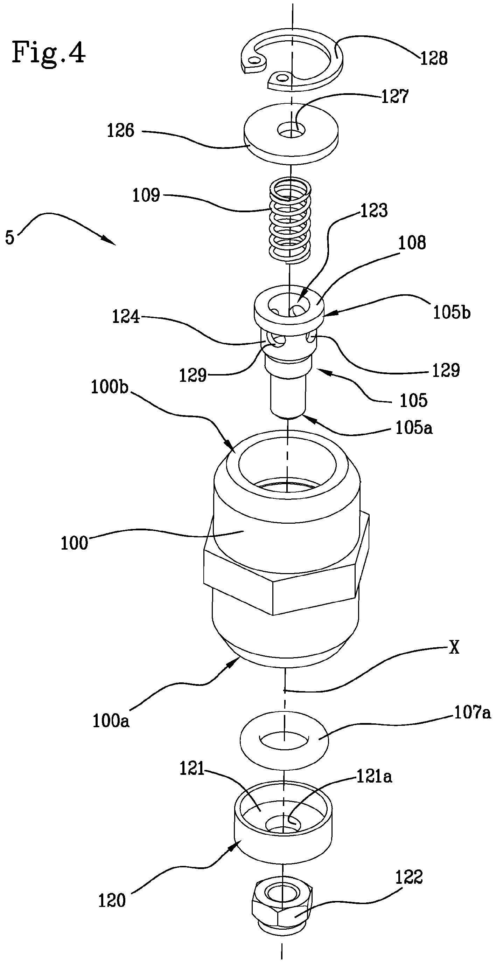

It should be noted that the stem 105 comprises an inner cavity 123, delimited by a lateral wall 124 (Figure 4), and that the end of stroke plate 108 forms an outer edge of the lateral wall 124.

As mentioned above, the opposing element is, for example, a helical spring 109 inserted in the outlet chamber 102, which presses against the end of stroke plate 108. More in detail, the helical spring 109 has a first end which acts on an outer surface of the end of stroke plate 108 and acts, for example, on a central area, in particular recessed, of the end of stroke plate 108.

The outer surface is a base 125 of the inner cavity 123, in such a way that the helical spring 109 is housed at least partly in the inner cavity 123 of the stem 105.

The valve 5 also comprises an outlet plate 126, positioned at the outlet end 100b, which is equipped with a respective central outlet opening 127 to allow the outfeed of the food preparation. The helical spring 109 has a second end which acts on the outlet plate 126.

A stop ring 128 is fixed in a groove of the valve body 100 to retain in position the outlet plate 126.

In a variant embodiment illustrated in Figure 4, the lateral wall 124 of the stem 105 comprises at least one lateral opening 129 for directing, in the open condition of the valve 5, the food preparation coming from the calibrated passageway 106 to the inner cavity 123 and facilitating the creation of a central outlet flow in the outlet chamber 102. Advantageously, in detail, the lateral wall 124 comprises a plurality of lateral openings 129, equally spaced angularly from each other in the lateral wall 124, for directing the food preparation to the inner cavity 123 and creating the central outlet flow towards the central opening 127.

The shutter 104 is movable between two limit positions defined by the stops of the two plates 107 and 108 on respective shoulders 103a and 103b, and that is to say, on the first shoulder 103a and on the second shoulder 103b.

In use, before dispensing the food preparation, the shutter 104 is in an end position wherein the end of stroke plate 108 is positioned in abutment on the second shoulder 103b pushed by the force exerted by the opposing member. During the normal condition for supplying the food preparation, the pressure exerted by the food preparation on the shutter 104 compresses the opposing member until reaching a position of equilibrium. In this condition, the shutter 104 is in an intermediate position between the two above-mentioned limit positions. This position guarantees the opening of the valve 5 and therefore the supply of the food preparation. During the procedure for cleaning the supply piping, the cleaning liquid, for example the cleaning water, is supplied to the valve 5 with a pressure greater than that for supplying the food preparation. This pressure difference is such as to determine an automatic passage of the valve 5 in the closed configuration. In this way, the cleaning liquid cannot reach the outlet chamber 102 of the valve 5 and, therefore, cannot come into contact with the animal.

Optionally, the valve 5 may also comprise a push-activated member (not present in drawings and of known type, for example in the form of a pushbutton) which is integral with the shutter 104 and coaxial thereto, which is positioned in the collection tank 2 to be pressed by the animal directly with the snout to open the shutter 104 at the start of the dispensing of the food preparation, for example when the collection tank 2 is empty.

It should be noted, therefore, that the invention achieves the preset aims thanks to a drinking trough 1 and a respective valve 5 for a drinking trough having a calibrated passageway 106 interposed between an inlet chamber 101 of the fluid and an outlet chamber 102 which, thanks to the pressure difference which is generated between the two chambers 101 and 102, defines the opening or closing of the valve 5.

Advantageously, the calibrated passageway 106 allows the outflow of the food preparation and the inhibiting of the cleaning liquid at the collection tank 2 with a high level of accuracy and reliability.

In particular, the calibrated passageway 106 overcomes the drawback of the flow of cleaning liquid at a high temperature, and optionally hot, to the collection tank 2 of the drinking troughs. In this way the animals are protected from the risk of the flow of cleaning liquid, for example high temperature hot water.

It should be added that, thanks to the presence in the valve 5 of a watertight seal made using an annular sealing element made of elastomeric material, the closing of the valve 5, in the closed condition, is guaranteed in a simple and economical way even in the presence of lumps due to the supply of a food preparation which is viscous and not filtered. Advantageously, the valve 5 for the drinking trough according to the invention makes it possible to obtain a drinking trough 1 which has a high level of safety for the animals of the livestock farming.

Moreover the use of the calibrated passageway 106 allows an autonomous type of operation and without the need for electricity or manpower.

Advantageously, the valve 5 and the drinking trough 1 according to the invention are economically sustainable and can contribute to the reduction of the maintenance costs of the entire farming system.

## Claims

1. A valve (5) for a drinking trough, wherein the drinking trough (1) comprises a collection tank (2), for containing a food preparation for animals, the valve (5) being configured for feeding the food preparation to the collection tank and for receiving said preparation from supply piping (4) of the food preparation; wherein the valve (5) comprises:
- a valve body (100) having an inlet chamber (101) and an outlet chamber (102), coaxially positioned along a common axis (X), the valve body (100) having a radial expansion (103) with an annular shape interposed between the inlet chamber (101) and the outlet chamber (102) to define a reduction of the passage section and a conduit (110) having a narrowed section; said radial expansion (103) defining in addition a first shoulder (103a) and a second shoulder (103b) positioned opposite each other and facing, respectively, towards the inlet chamber (101) and towards the outlet chamber (102); the valve (5) also comprising:
- a shutter (104) mounted on the valve body (100), in a slidable fashion along said axis (X), and having a stem (105) at least partly inserted inside the conduit (110); wherein the shutter (104) also comprises a closing plate (107) coupled to a first end (105a) of the stem (105), which is positioned inside said inlet chamber (101) and is configured for abutting the first shoulder (103a) in a closed condition of the valve (5), said shutter (104) being subject to the action of an opposing member to keep the closing plate (107) in a position spaced from the first shoulder (103a) in an open condition of the valve (5);
- the stem (105) of the shutter (104) and the radial expansion (103) forming between them a calibrated passageway (106) configured to place in communication the inlet chamber (101) and the outlet chamber (102) in the open condition of the valve (5) in such a way that, when the pressure of the food preparation inside the inlet chamber (101) is below a predetermined value, the closing plate (107) is kept spaced from the first shoulder (103a) by means of said opposing member and the food preparation can flow through the calibrated passageway (106) whilst when the pressure of a cleaning liquid inside the inlet chamber (101) is above the predetermined value the closing plate (107) is pushed against the first shoulder (103a) causing closure of the valve (5); and wherein
- the closing plate (107) comprises a cup-shaped body (120) equipped with a bottom (121), from which extends the stem (105), and an annular sealing element (107a) made of elastomeric material,
- the sealing element (107a) surrounding the stem (105) and being housed in the cup-shaped body (120) for making a fluid-tight seal with a planar annular portion of the first shoulder (103a) in the closed condition of the valve (5).

2. The valve for a drinking trough according to claim 1, wherein the calibrated passageway (106) has a thickness of between 0.08 mm and 0.6 mm, for example between 0.1 mm and 0.5 mm, and preferably constant.

3. The valve for a drinking trough according to any one of the preceding claims, wherein the stem (105) has an end portion arranged such as to be inserted in a central opening (121a) of the bottom (121) and to protrude from it, and wherein the valve (5) comprises a fixing element (122) shaped to engage with the protruding end portion so as to fix the stem (105) centrally on the cup-shaped body (120).

4. The valve for a drinking trough according to any one of the preceding claims, wherein the shutter (104) comprises an end of stroke plate (108) positioned at a second end (105b) of the stem (105) and configured for abutting the second shoulder (103b) at an end of stroke position corresponding to a maximum distance between the closing plate (107) and the first shoulder (103a).

5. The valve for a drinking trough according to claim 4, wherein the stem (105) comprises an inner cavity (123) delimited by a lateral wall (124), the end of stroke plate (108) forming an outer edge of the lateral wall (124).

6. The valve for a drinking trough according to claim 4, or 5, wherein the opposing member is made as a helical spring (109) inserted in the outlet chamber (102) and having a first end which is acting on an outer surface (125) of the end of stroke plate (108).

7. The valve for a drinking trough according to claim 6, when dependent on claim 5, wherein the outer surface (125) is a base of the inner cavity (123) in such a way that the helical spring (109) is housed at least partly in the inner cavity (123).

8. The valve for a drinking trough according to one of the preceding claims, wherein the valve body (100) has an inlet end (100a), connectable to the supply piping (4), and an outlet end (100b), connectable to the collection tank (2).

9. The valve for a drinking trough according to claim 8, when dependent on claim 6, or 7, and comprising an outlet plate (126) positioned at the outlet end (100b) which is equipped with a central outlet opening (127) for the outfeed of the food preparation, the helical spring (109) having a second end which is active on the outlet plate (126).

10. The valve for a drinking trough according to any one of claims 5 to 9, wherein the lateral wall (124) comprises at least one lateral opening (129) for directing, in the open condition of the valve (5), the food preparation coming from the calibrated passageway (106) to the inner cavity (123) and facilitate the creation of a central outlet flow in the outlet chamber (102).

11. The valve for a drinking trough according to claim 10, when dependent on claim 9, wherein the lateral wall (124) comprises a plurality of lateral openings (129) for directing the food preparation to the inner cavity (123) and to create the central outlet flow towards the central outlet opening (127).

12. The valve for a drinking trough according to any one of the preceding claims, wherein the inlet chamber (101) and the outlet chamber (102) are substantially tubular in shape and have a substantially circular cross-section.

13. The valve for a drinking trough according to any one of the preceding claims, also comprising a push-activated member positioned coaxially relative to the shutter (104) for moving the closing plate (107) spaced from the first shoulder (103a).

14. A drinking trough for animals comprising a collection tank (2) for containing a food preparation and a valve (5) according to any one of the preceding claims, which is configured for feeding the food preparation to the collection tank (2) and to receive the food preparation from supply piping (4) of the food preparation.

15. The drinking trough according to claim 14, wherein the collection tank (2) has a lower end (2a) which can be connected to the supply piping (4), the valve (5) being interposed between the collection tank (2) and the supply piping (4).
